# EUROPEAN PATENT SPECIFICATION

(11) **EP 1 505 887 B1**
(45) Date of publication and mention of the grant of the patent: **23.11.2005**
(21) Application number: 03752660.5
(22) Date of filing: 11.04.2003
(51) Int. Cl.: A23L 1/24, A23L 1/03, A23D 7/00, A23L 1/22

(54) **EDIBLE EMULSION COMPRISING LIVE MICRO-ORGANISMS**
GENUSSFÄHIGE EMULSION MIT LEBENDEN MIKROORGANISMEN
EMULSION COMESTIBLE COMPRENANT DES MICRO-ORGANISMES VIVANTS

(30) Priority: 17.05.2002 EP 02291230
(43) Date of publication of application: 16.02.2005
(73) Proprietor: UNILEVER N.V., 3013 AL Rotterdam (NL); UNILEVER PLC, London, Greater London EC4P 4BQ (GB)
(72) Inventor: AGUILAR, Corinne, F-21000 Dijon (FR); BECK-TRESCOL, Laurence, Unilever Bestfoods France, F-21000 Dijon (FR); RIFFET, Christian, F-21270 Losne (FR)
(74) Representative: Tjon Tien Ril, Hon Kong Guno
(86) International application number: PCT/EP2003/003787
(87) International publication number: WO 2003/096822

(56) References cited:
- EP-A- 0 049 927
- EP-A- 0 689 773
- EP-A- 0 768 042
- WO-A-00/54600
- WO-A-02/30211
- US-A- 1 697 312
- US-A- 3 025 165
- PATENT ABSTRACTS OF JAPAN vol. 004, no. 173 (C-032), 29 November 1980 (1980-11-29) -& JP 55 111771 A (WAKAYAMA HARUO), 28 August 1980 (1980-08-28) cited in the application
- DATABASE WPI Section Ch, Week 200216 Derwent Publications Ltd., London, GB; Class J02, AN 1994-097130 XP002215052 -& JP 2001 354506 A (TOSHIN KAGAKU KK), 25 December 2001 (2001-12-25) cited in the application

## Description

### FIELD OF THE INVENTION

The present invention relates to a process to produce edible emulsions comprising live (desirable) micro-organisms and to the edible oil-in water emulsions so produced. The invention particularly relates to edible oil-in-water emulsions comprising live micro-organisms in sufficient quantity to impart specific nutritional or taste properties to said edible emulsion, even after storage at refrigeration temperatures for several weeks.

### BACKGROUND OF THE INVENTION

It is known to be desirable to include live micro-organisms in edible emulsion products in order to provide specific nutritional properties to the consumer and/or specific organoleptic properties to the emulsion. For example, specific micro-organisms which are known to be beneficial to the maintenance or improvement of the health of the consumer may be included. Examples of such beneficial micro-organisms include those found in yoghurt and other milk cultures.

In view of the increasing interest from consumers in a healthy diet, it is becoming more important to provide different food products which comprise probiotics, such as bacteria, in order to meet the demands in the market place for such products.

The processing of edible emulsions comprising live micro-organisms is disclosed in JP 62220186 and WO 02/30211.

It is known from these documents that when live micro-organisms are placed in contact with the external aqueous phase of an edible emulsion composition, they are generally destroyed in a relatively short time-scale. This results in problems in providing to the consumer an emulsion product comprising live micro-organisms. This problem is greater when edible acids are present in the external aqueous phase of the emulsion (for example for reasons of organoleptic properties).

The solution provided by JP 62220186 and WO 02/30211 is to produce what is known in the art as a duplex emulsion, that is a water-in-oil-in-water emulsion, and to isolate the live micro-organisms within the primary water-in-oil emulsion.

Whilst these water-in-oil-in-water emulsions provide effective protection of, and thus longevity for, the micro-organisms the processes used to produce them are somewhat complicated and the physical format of the emulsion limits their formulation flexibility. It may also limit the concentration of the micro-organisms which can be included in the emulsion.

US 1,697,312 discloses food emulsions comprising vegetable oils, yolk material, milk constituents and with a culture added thereto to thicken the product.

EP-A-689,773 discloses mayonnaise and dressing products comprising a gluconodelta lactose preservative system, and which products are innovated with Lactobacilli in order to test their resistance to bacterial spoilage.

FR 2 808 422 discloses a yoghurt dressing for a kebab, the dressing comprising about 75% by weight yoghurt and about 10% by weight mayonnaise. The dressing is presumably designed to be made and used within a short period of time. There is no disclosure as to whether the product comprises live micro-organisms.

GB 2 207 849 discloses a process to make a dairy based spread comprising live ferments. The ferments are said to have good longevity but are produced by a complicated process involving ultra-filtration and very specific heating conditions.

US 3 025 165 discloses butterfat-free yoghurt comprising an unsaturated oil or fat. It provides a palatable way of ingesting the oil.

JP 55111771 discloses a dressing for treating geriatric and adult diseases. The dressing comprises mustard powder, pectin, bulgaria yoghurt and is an oil-in-water emulsion.
JP 2001354506-A-(J06047272) discloses oil-in-water emulsions comprising phospholipid emulsifier and having microbicide action.

There is a need in the art to provide an alternative process for the preparation of edible emulsions comprising live micro-organisms. Ideally the process should be simple, easy to implement commercially and/or provide emulsion products which have good formulation flexibility and which exhibit a commercially acceptable lifetime for the micro-organisms so that the desired benefits are delivered to the consumer.

Furthermore, there is a need to provide edible emulsions which comprise, at the time of consumption, amounts of desirable micro- organisms which are beneficial to the consumer but which do not comprise unacceptable, or health endangering, amounts of undesirable pathogens or spoilage yeasts or moulds.

It is known in the art to use pasteurisation or heat processing steps when preparing edible emulsions to ensure that these undesirable pathogens or spoilage yeasts or moulds are controlled. Disclosures of such heat-treatments are given, for example, in WO 94/09636, EP 049 927, WO 00/54600, EP 768 042 and Journal of Food Science Vol. 63, No. 4, 1998, page 702-705).

However, such heat treatment steps limit the processing flexibility for when live micro-organisms may be added and/or kill or otherwise adversely affect the micro-organisms and/or increase the cost and complexity of the production process.

It is an object of the invention to address one or more of the above-mentioned problems.

In particular, it is an object of the invention to provide a simple process for the preparation of edible emulsions comprising live desirable micro-organisms but not comprising unwanted levels of undesirable pathogens or spoilage yeasts or moulds.

It is further object of the invention to provide a process of preparing edible emulsions comprising beneficial levels of live desirable micro-organisms but not comprising unwanted levels of pathogens or spoilage yeasts or moulds, which emulsions have an acceptable level of the live desirable micro-organisms after at least 3 weeks storage at 8°C so as to provide the benefits of the live desirable micro-organisms to the consumer. The emulsion is thus provided with specific nutritional properties and/or taste.

It is a further object of the invention to provide such edible emulsions which are not subject to disadvantageous emulsion-phase volume restrictions in the concentration of the live micro-organisms which can be incorporated in the emulsions.

Furthermore, it is an object of the invention to provide edible emulsions which have good formulation flexibility with regard to the type and/or amount of the micro-organism which can be incorporated.

Traditional mayonnaise is an oil-in-water emulsion comprising vegetable oil (75-80%), egg yolk (5-8%), salt, vinegar, and optionally sugar, mustard, pepper and herbs. It usually has a pH of about 3.7-4.2 and the oil is generally present as droplets dispersed in a water phase. From the droplet size and the high amount of dispersed phase, the close packing of oil droplets gives the typical rheological behaviour of mayonnaise, which is perceived by consumers as thickness.

There is an increasing demand from consumers for mayonnaise-type products and dressings which comprise a low content of oil but without compromising the sensorial properties associated with full fat mayonnaise such as thickness and mouthfeel. The low-oil content products are perceived as healthier by the consumer than their full-oil content equivalents.

It is a further object of the invention to provide low-oil content mayonnaises and dressings comprising advantageous levels of desirable live micro-organisms upon consumption. These products are considered by the consumer to provide a good combination of beneficial live micro-organisms with reduced oil content of the product.

### Definitions

The term "live (desirable) micro-organisms" as used herein, refers to micro-organisms including bacteria which it is desired to include in the edible emulsion and which are alive. These micro-organisms typically impart a health or organoleptic property to the edible emulsion.

The term "pathogen" as used herein, refers to micro-organisms which it is not desired to include, or allow to proliferate, in the edible emulsion. Examples include micro-organisms known to cause food poisoning.

The term "spoilage yeasts or moulds" as used herein refers to such yeasts or moulds which can cause food spoilage, for example, by gas formation in the product or mould or spore growth on the product surface.

An "oil-in-water emulsion" as used herein refers to an emulsion which is a dispersed oil phase in a continuous water phase. It does not include water-in-oil-in-water emulsions.

### SUMMARY OF THE INVENTION

We have surprisingly found that one or more of the above can be achieved by the inclusion of live desirable micro-organisms in an edible oil-in-water emulsion comprising a preservation system against pathogens and spoilage yeasts or moulds, which is prepared without a heat treatment step and which is subsequently stored at a temperature of 8°C or less.

The present invention therefore provides, according to a first aspect, a process for the preparation of an edible oil-in-water emulsion comprising live micro-organisms, the process comprising the step of emulsifying an edible mixture comprising oil, water, live micro-organisms, emulsifier and a preservation system and further and the process being carried out at a temperature of 35°C or less, and wherein the oil-in-water emulsion is stored at a temperature of 8°C or less after preparation.

It is especially preferred that the process is carried out at a temperature of 25°C or less, most preferably 20°C or less.

According to a second aspect, the present invention also provides a process for the preparation of an edible oil-in-water emulsion comprising live micro-organisms, the process comprising the step of emulsifying an edible mixture comprising oil, water, live micro-organisms, emulsifier and a preservation system and the process being carried out without a heat treatment step and wherein the oil-in water emulsion is stored at a temperature of 8°C or less after preparation.

It is preferred according to both the first and second aspects of the invention that the oil-in-water emulsion is stored at a temperature of 6°C or less after preparation, more preferably at a temperature of 5°C or less.

It is further preferred that the oil-in-water emulsions have a pH at 20°C in the range of from 4.0 to 5.0, preferably in the range of from 4.4 to 4.8. It is also preferred that the emulsions comprise an amount of from 0.1 to 1.3% by weight of edible acid content in the aqueous phase of the emulsion. It has been found to be particularly advantageous if the emulsion has a pH at 20°C in the range of from 4.4 to 4.8 and an edible acid content in the aqueous phase of from 0.3 to 0.75% by weight.

The first and second aspects of the invention have been found to be simple processes for producing oil-in-water emulsions comprising live desirable micro-organisms. The proliferation of undesirable pathogens and spoilage yeasts and moulds is avoided and the desirable micro-organisms have been found to remain alive for commercially acceptable periods of time.

According to a third aspect, the present invention provides an edible oil-in-water emulsion obtainable by the process of either one of the first or second aspect of the invention.

It is preferred that the presence of live micro-organisms can be detected in the oil-in-water emulsion after storage for at least 3 weeks at a maximum temperature of 8°C.

The oil-in-water emulsions of the invention have been found to show good longevity of the desirable micro-organisms and not to suffer from unacceptable contamination by pathogens or spoilage yeasts or moulds.

Except in the operating and comparative examples, or where otherwise explicitly indicated, all numbers in this description indicating amounts of material or conditions of reaction, physical properties of materials and/or use are to be understood as modified by the word "about". All amounts and percentages are by weight, unless otherwise specified.

The term "comprising" is meant not to be limiting to any subsequently stated elements but rather to encompass non-specified elements of major or minor functional importance. In other words the listed steps, elements or options need not be exhaustive. Whenever the words "including" or "having" are used, these terms are meant to be equivalent to "comprising" as defined above.

### DETAILED DESCRIPTION OF THE INVENTION

The invention will now be discussed in greater detail. The following details apply to both the first and second aspects of the invention unless otherwise stated.

### Process details

### (i) emulsification of the edible mixture

The process step of the emulsification of the edible mixture comprising oil, water, live micro-organisms, emulsifier and a preservation system against pathogens or spoilage yeasts or moulds may be carried out according to any suitable method known in the art. Typically, the ingredients are mixed together to form a mixture which is then subjected to a shear-mixing operation to form the emulsion.

The emulsification step may typically take between 0.5 and 10 minutes, more preferably between 1 and 7 minutes, most preferably between 2 and 6 minutes, depending upon the level of shear applied and the ingredients. The emulsification step is continued for the time necessary to produce an oil-in-water emulsion.

Other ingredients such as flavourings, colourings, aromas, thickeners, stabilisers and organic acids may also be present in the edible mixture when it is emulsified.

The process according to the first aspect is carried out at a temperature of 35°C or less. It is possible that the process may go slightly above the given temperatures for very limited periods of time providing that the process is carried out substantially at the given temperature. It is preferred that the process is carried at a temperature of 30°C or less, more preferably 25°C or less, most preferably 20°C or less.

The process according to the second aspect is carried out without a heat treatment step. As the ambient temperature of different countries or seasons varies, the exact temperature at which this aspect is carried out may vary. However, it is not anticipated that the process will be carried out at temperatures substantially above 35°C. The limitation to no heat treatment step being used in the process does not extend to any heat-treatment step which may have been applied to the individual ingredients during their manufacture.

### (ii) optional formation of a first emulsified mixture a)

The above process step of emulsifying the edible mixture may be preceded by a process step wherein the oil, water, live micro-organisms, emulsifier and preservation system are emulsified together to form a first emulsified mixture a). This first emulsified mixture a) is subsequently subjected to at least one further processing step, which preferably includes at least one further emulsification step, to form the edible oil-in-water emulsion. The further processing steps will include the step of emulsifying the edible mixture. The process used to produce the first emulsified mixture a) may be any suitable process known in the art.

It is possible that the edible mixture and the first emulsified mixture a) are of identical compositions. However, more typically, an addition of further ingredients will be made to the first emulsified mixture a) prior to the further process step of the emulsification of the edible mixture.

The first emulsified mixture a) may further comprise at least one ingredient selected from flavourings, aromas, colourings, stabilisers, organic acids and thickeners.

The temperatures of the process steps to form the emulsion of the edible mixture and the first emulsified mixture a) may be different provided that the provisions of the first or second aspects of the invention are met. Preferably the temperature of the two process steps, if both are used, does not vary by more than 10°C, preferably not more than 5°C. It is especially preferred that substantially the same temperature is used in both steps.

Suitable timings of the emulsification step to produce the first emulsified mixture a) are the same as for the emulsification of the edible mixture.

### (iii) optional pH adjustment

The processes of the invention most preferably comprise a step of pH reduction. This pH reduction step may occur before or after the oil-in-water emulsion has been formed but preferably occurs before. According to one embodiment of the invention, it is preferred that the process comprises the steps of forming the emulsified mixture a) and subjecting it to a pH reduction step.

The pH at 20°C of the emulsified edible emulsion is preferably not less than 4.0, more preferably not less than 4.2, most preferably in the range of from 4.2 to 5.0, especially in the range of from 4.4 to 4.8.

Any suitable edible acid may be used in the pH reduction step, preferably edible organic acids are used. The edible acid is believed to substantially remain in the aqueous continuous phase of the oil-in-water' emulsion. Thus, contrary to what is expected from the teaching of the prior art, it has been found that surprisingly when the edible acid content in the aqueous phase is controlled to within given limits, it does not unacceptably affect the live micro-organisms which are also believed to be present in the aqueous continuous phase.

The edible acids are preferably selected from acetic acid, citric acid, lactic acid, phosphoric acid, hydrochloric acid, malic acid, tartaric acid, gluconic acid and mixtures thereof. Most preferred are organic acids, especially acetic acid, citric acid, or and mixtures thereof.

The process preferably comprises the step of mixing at least one of the emulsion ingredients, the first emulsified mixture a) or the edible oil-in water emulsion with at least one edible acid.

As stated above, the control of the pH is believed to be important in providing especially good results according to the present invention. It is often, however, necessary to provide an acidic taste to the oil-in-water emulsion to meet consumer demands. It is known from the prior art that high levels of acid in the aqueous continuous phase of the emulsion can adversely affect the desirable micro-organisms. For example, WO 02/30211 discloses that live micro-organisms are susceptible to attack from the acidity of an aqueous phase in a mayonnaise type product.

The oil-in-water emulsion preferably comprises in the aqueous phase at least one edible acid. This edible acid may be present from the pH reducing step described above or it may be added at another point in the preparation process. The presence of the acid can aid in the inhibition of the growth of pathogens and food spoilage yeasts or moulds but it does not form a part of the preservation system as herein defined.

The oil-in-water emulsions preferably comprise an amount of from 0.1 to 1.3% by weight of edible acid content in the aqueous phase of the emulsion, more preferably 0.2 to 1.0%, most preferably 0.3 to 0.7 or 0.8% by weight. It is preferred that the emulsion has a pH at 20°C of not less than 4.0 and comprises of from 0.1 to 1% by weight of edible acid content in the aqueous phase of the emulsion. It is especially preferred that the emulsion has a pH at 20°C of from 4.4 to 4.8 and comprises of from 0.3 to 0.75% by weight of edible acid content in the aqueous phase of the emulsion.

The edible acid content in the aqueous phase as referred to herein refers to the total acid content of the aqueous phase expressed as the equivalent percentage of acetic acid. It is calculated by assuming that all the edible acid is present in the aqueous phase, with the aqueous phase being made up of the water and all water-soluble ingredients.

### (iv) addition of the raw materials

The raw materials used to form the oil-in-water emulsions may be subjected to stirring or other mixing operations (such as grinding) before the emulsification processing steps. It is within the ability of the person skilled in the art to determine suitable mixing times and methods.

### (v) other points

The temperature of the process should ideally not vary by more than by about 10°C during the entire process, preferably not more than by about 5°C.

It is also preferred that the process does not comprise an ultra-filtration step. This has been found to be unnecessary and only increases the cost and complexity of the process.

The emulsification process can be carried out using known emulsifying devices such as mixers or blenders. Alternatively an homogeniser, such as a high-pressure homogeniser may be used. Preferred pressure ranges for the homogeniser are between 20 and 400 bar.

The live micro-organisms may be included in the oil-in-water emulsion either by their direct addition, or, by the addition of a product comprising them. Preferably they are present from the inclusion of an edible live micro-organism containing product.

The addition of the edible live micro-organism-containing product has the advantage that its taste may be imparted to the edible oil-in-water emulsion. The edible live micro-organism-containing product may be any suitable dairy based, fruit based or vegetable based product. Suitable examples include yoghurt or soy-bean products, especially yoghurt.

It is preferred that the oil in-water emulsion comprises,an amount of from 5 to 50% by weight of the edible live micro-organism-containing product, more preferably 10 to 35% by weight, most preferably 15 to 25% by weight.

According to both the first and second aspects of the invention it is preferred that the oil, at least a part of the preservative system and optionally thickeners and flavouring agents are mixed together. The water, live micro-organisms or products comprising them, optional flavourings and aromas, a further part of the preservation system (e.g. potassium sorbate) and the emulsifier are added thereto and the resulting mixture is emulsified to produce a first emulsified mixture a). The pH of this mixture is reduced as desired by the addition of pH reducing agents (edible acids). Finally the edible mixture comprising oil, water, live micro-organisms, emulsifier and preservation-system is subjected to further emulsification step to produce the product.

### Product details

The oil-in-water emulsion according to the third aspect of the invention will now be described in more detail.

### (i) Live micro-organisms

The live micro-organisms may be selected from any live micro-organisms which it is desirable to include in food products. Preferred micro-organisms are bacteria based on lactic ferments, lactic yeasts or lactic bacteria per se, or based upon a simple or complex mixture of any such ferments, yeasts or bacteria.

It is especially preferred that the live micro-organisms are selected from the following strains Lactobacillus Bulgaricus, Lactobacillus Casei, Lactobacillus Acidophilus, Lactococcus Lactis, Streptococcus Thermophilus, Bifidobacterium Bifidum, Bifidobacterium Lingum and mixtures thereof, especially from Lactobacillus Bulgaricus and Streptococcus Thermophillus or a mixture thereof.

The live micro-organisms are present in the aqueous continuous phase of the oil-in-water emulsion.

It is especially preferred that live desirable micro-organisms can be detected in the oil-in-water emulsions after storage at a maximum temperature of 8°C for at least 3 weeks, preferably after 6 weeks. Storage temperatures of about 6° or 5°C or less have been found to be even more effective.

A preferred level of live micro-organisms in the product after the above-mentioned storage time is at least 10⁵ or 10⁶ bacteria per gram of emulsion.

### (ii) Water

The oil-in-water emulsions preferably comprise an amount of from 15 to 60% by weight of water, more preferably 20 to 50% by weight, most preferably 25 to 40% by weight.

### (iii) Oil

The oil used to prepare the oil-in-water emulsions may be any edible oil which is substantially liquid at room temperature.

Oils of vegetable origin are preferred, especially triglyceride oils. Most preferred are corn, olive, soy bean, palm, sesame, safflower, canola, linseed oil or mixtures thereof. Sunflower oils and olive oils are most preferred.

Although a wide variety of fat levels may be used in the oil-in -water emulsions of the invention, it is preferred that they comprises an amount of from about 30-75% by weight of oil, preferably about 35-70% by weight of oil.

### (iv) Emulsifier

The emulsifier used to prepare the oil-in-water emulsions may be any suitable hydrophilic edible emulsifier. Preferred are egg-yolk derived emulsifiers or milk protein derived emulsifiers.

If the emulsifier is an egg yolk derived emulsifier, it is preferably selected from egg yolk, stabilised egg yolk, fortified stabilised egg mix, dried egg yolk, salted egg yolk, enzymatically treated egg yolk and whole eggs. Salted egg yolk is especially preferred. Suitable milk protein derived emulsifiers include whey protein or a casein salt.

The oil-in-water emulsions preferably comprise an amount of from about 0.05 to 8% by weight, more preferably from about 0.1 to 7% of emulsifier. In general lower amounts of the milk protein derived emulsifiers are needed than of the egg yolk derived emulsifier.

### (v) Preservation system

The oil-in-water emulsions comprise a preservation system which is active against pathogens and food spoilage yeasts or moulds. Any such preservation system conventionally used in edible food emulsions may be used. It is especially preferred that the preservation system comprises allyl isothiocyanate, sorbate salts such as sodium or potassium sorbate or mixtures thereof. The allyl isothiocyanate may be included in the emulsion either as mustard, mustard extract or as the isolated ingredient. A mixture of allyl isothiocyanate and potassium or sodium sorbate has been found to be particularly effective.

The preservation system is preferably present in an amount of from 0.01 to 1% by weight, more preferably in an amount of from 0.05 to 0.5% by weight based on the weight of the oil-in-water emulsion.

### Optional ingredients

The oil-in-water emulsions of the invention may comprise optional ingredients selected from flavourings, aromas, colourings, stabilisers and thickeners. Such ingredients may be in a liquid or semi-liquid form. Flavour ingredients may be based on, for example: mustard, salt and pepper, sugar, flavouring herbs, flavouring vegetables (garlic, onions, etc). Thickeners may be based on, for example: starches and gums.

Lowering the amount of oil in an otherwise standard oil-in-water emulsion formulation, such as mayonnaise, leads to a less dense packing of the oil droplets in the water phase resulting in a reduced viscosity and/or thickness. Such a product will be pourable rather than spoonable or spreadable. To overcome this problem thickeners such as starch or gums may be used to increase thickness (viscosity) of the formulation.

The compositions according to the invention may comprise natural gums, and/or oligo- and polysaccharides and/or starch or modified starch in order to prevent syneresis or to improve long-term stability of the emulsion.

The amount of these optional ingredients will depend upon the type of ingredient included but will typically be in the range of from 0.05 to 2 or 5% by weight per type of ingredient (individual flavour etc). The total amount of these ingredients will typically be in the range of from 0.5 to 10 or 15% by weight of the oil-in-water emulsion.

### Types of product

The edible oil-in-water emulsions of the invention may be used in, or as, many types of culinary products, for example mayonnaise(including the so-called low-fat mayonnaises), side sauces and dressings such as those for salads. A side sauce is a sauce that is served as a separate accompaniment to another food with which it is e.g. a dipping sauce. A dressing is served in contact with the food with which it is eaten. The products are preferably spoonable or pourable. Other preferred embodiments of the invention are side sauces having a low level of oil.

Low-fat products (that is products specifically formulated to have a lower fat content than their full fat equivalents) are particularly preferred according to the present invention, for example low fat mayonnaise and dressings according to the invention and having a fat content of less than 55% by weight.

The present invention will be further explained with reference to the following non-limiting examples. Further examples within the scope of the invention will be apparent to the person skilled in the art.

### EXAMPLES

### Example 1 to 5

A series of low oil content mayonnaises, examples 1 to 5, were prepared as in table 1. All percentages are by weight unless otherwise stated.

**Table 1**

| | 1 | 2 | 3 | 4 | 5 |
|---|---|---|---|---|---|
| Water | 30.63 | 30.13 | 29.63 | 29.13 | 28.63 |
| Sunflower oil | 39.0 | 39.0 | 39.0 | 39.0 | 39.0 |
| Yoghurt*1 | 20.0 | 20.0 | 20.0 | 20.0 | 20.0 |
| Salted egg yolk emulsifier (11.25%wt) | 5.50 | 5.50 | 5.50 | 5.50 | 5.50 |
| Potassium sorbate | 0.2 | 0.2 | 0.2 | 0.2 | 0.2 |
| Pre-cooked starch and gum | 2.70 | 2.70 | 2.70 | 2.70 | 2.70 |
| Flavourings and salt | 0.87 | 0.87 | 0.87 | 0.87 | 0.87 |
| Spirit vinegar (10%wt) | 1.0 | 1.5 | 2.0 | 2.5 | 3.0 |
| Mustard flavour | 0.05 | 0.05 | 0.05 | 0.05 | 0.05 |
| Conc. lemon juice (45 brix) | 0.05 | 0.05 | 0.05 | 0.05 | 0.05 |
| Total (%wt) | 100.0 | 100.0 | 100.0 | 100.0 | 100.0 |

| | | | | | |
|---|---|---|---|---|---|
| *1 yoghurt comprises Lactobacillus Bulgaricus + Streptococcus Thermophilus | | | | | |

The samples were made by mixing together the sunflower oil, flavourings, mustard flavour, pre-cooked starch and gum and subjecting them to a mild grinding operation for about 3 to 5 minutes to produce a substantially homogenous mixture. To this mixture was added the water, yoghurt, salt, potassium sorbate and the emulsifier. The resultant mixture was mixed for about 4 to 9 minutes to obtain a first emulsified mixture. To this first emulsified mixture was added the spirit vinegar and the lemon juice concentrate and the mixture was again mixed to produce the edible oil-in-water emulsion. If required, the oil-in-water emulsion may be subjected to a de-aerating step. The process was carried out at a temperature which was maintained at below 20°C.

Portions were removed from the samples produced and tested for the concentration of desirable micro-organisms present (L. Bulgaricus + S. Thermophilus). The samples were then stored at 8°C, with samples taken at 1, 2 and 3 months to determine the concentration of desirable micro-organisms present. The physical parameters of the samples are given in table 2 and the results of the evaluation for the longevity of the desirable micro-organisms are given in table 3.

**Table 2**

| | 1 | 2 | 3 | 4 | 5 |
|---|---|---|---|---|---|
| pH at 20°C | 4.68 | 4.57 | 4.46 | 4.36 | 4.3 |
| aqueous edible acid content | 0.40 | 0.51 | 0.58 | 0.69 | 0.72 |
| dry extract % | 44 | 44 | 44 | 44 | 44 |

**Table 3**

| Concentration of bacteria after 8°C storage. | 1 | 2 | 3 | 4 | 5 |
|---|---|---|---|---|---|
| Initial | 5.00E+ 07 | 8.00E+ 07 | 1.06E+ 08 | 5.30E+ 07 | 8.60E+ 07 |
| 1 month | 5.20E+ 07 | 2.60E+ 07 | 9.00E+ 06 | 3.40E+ 07 | 1.70E+ 07 |
| 2 months | 5.60E+ 07 | 3.50E+ 07 | 1.70E+ 06 | 1.10E+ 06 | 1.00E+ 06 |
| 3 months | 7.0E+ 05 | 1.3E+ 05 | 1.3E+ 06 | 8.0E+ 05 | 4.0E+ 06 |

The above results show that by using the process of the invention, mayonnaise products can be produced which have good longevity for desirable micro-organisms even after storage for 2 or 3 months. The process is not complicated and is effective.

### Example 6

Example 3 was repeated as detailed above and stored at 4°C and 8°C to assess the effects of storage at a lower temperature. The results are given in table 4.

**Table 4**

| Concentration of L. Bulgaricus S. Thermophilus after storage. | 4°C | 8°C |
|---|---|---|
| Initial | 9.4E+07 | 9.4E+07 |
| 1 month | 2.4E+07 | 6.6E+07 |
| 2 months | 6.6E+06 | 2.2E+05 |
| 3 months | 2.2E+05 | 2.6E+04 |

The above results demonstrate that by using a storage temperature of 4°C, better longevity of the desirable micro-organisms is obtained.

### Example 7

Examples 1 to 5 were repeated but using stabilised egg-yolk emulsifier. The products were pasteurised at 80°C. No live L. Bulgaricus & S. Thermophilus were detected in the products after pasteurisation and so the products were not put on storage tests.

### Example 8

Example 8 was prepared using the same process as in Examples 1 to 5. The composition is given in table 5 below.

**Table 5**

| | % wt |
|---|---|
| Water | 29.83 |
| Sunflower oil | 39.05 |
| Yoghurt | 20.00 |
| Salted egg yolk emulsifier (11.25% wt) | 5.50 |
| Pre-cooked starch & gum | 2.60 |
| Flavours | 0.02 |
| Salt | 0.80 |
| Vinegar (10%) | 2.00 |
| Conc. Lemon juice (45 brix) | 0.05 |
| Xanthan gum | 0.10 |
| Liquid pepper | 0.05 |
| Total | 100.00 |

The composition comprised no preservative. After 1 week of storage at 15°C microbiological spoilage of the product was detected which rendered the compositions unfit for human consumption. As a comparative example, an amount of 0.2% (based on the total weight of the composition) of the water in Example 8 was replaced by 0.2% potassium sorbate (thus 29.63% wt water and 0.2% wt potassium sorbate). No microbiological spoilage of the product was detected after 1 week storage at 15°C.

## Claims

1. A process for the preparation of an edible oil-in-water emulsion comprising live micro-organisms, the process comprising the step of emulsifying an edible mixture comprising oil, water, live micro-organisms, emulsifier and a preservation system and the process being carried out at a temperature of 35°C or less, and wherein the oil-in-water emulsion is stored at a temperature of 8°C or less after preparation.

2. A process for the preparation of an edible oil-in-water emulsion comprising live micro-organisms, the process comprising the step of emulsifying an edible mixture comprising oil, water, live micro-organisms, emulsifier and a preservation system and the process being carried out without a heat treatment step, and wherein the oil-in-water emulsion is stored at a temperature of 8°C or less after preparation.

3. The process according to either one of claims 1 or 2, wherein the process is carried out at a temperature of 25°C or less.

4. The process according to any one of the preceding claims, wherein the oil, water, live micro-organisms, emulsifier and preservation system are emulsified together to form a first emulsified mixture a) which first emulsified mixture is subjected to at least one further processing step to form the edible oil-in-water emulsion.

5. The process according to any one of the preceding claims, wherein the process comprises a step of pH reduction using an edible acid.

6. The process according to any one of the preceding claims, wherein the pH at 20°C of the oil-in-water emulsion is in the range of from 4.0 to 5.0.

7. The process according to claim 6, wherein the pH is in the range of from 4.4. to 4.8.

8. The process according to any one of the preceding claims wherein the oil-in-water emulsion comprises an amount of from 0.1 to 1.3% by weight of edible acid content in the aqueous phase of the emulsion.

9. The process according to any one of the preceding claims, wherein the live micro-organisms are included in the oil-in-water emulsion by the inclusion of an edible live micro-organism containing product.

10. The process according to claim 9, wherein the edible live micro-organism containing product is yoghurt.

11. The process according to either one of claims 9 or 10, wherein the oil-in-water emulsion comprises an amount of from 5 to 50% by weight of the live micro-organism-containing product.

12. The process according to any one of the preceding claims, wherein the live micro-organisms are selected from bacteria based on lactic ferments, lactic yeasts, lactic bacteria, and mixtures thereof.

13. The process according to claim 12, wherein the lactic bacteria are selected from the following strains:
Lactobacillus Bulgaricus, Lactobacillus Casei, Lactobacillus Acidophilus, Lactococcus Lactis, Streptococcus Thermophilus, Bifidobacterium Bifidum, Bifidobacterium Lingum and mixtures thereof.

14. The process according to any one of the preceding claims, wherein the oil-in-water emulsion comprises an amount of from 30-75% by weight of oil.

15. The process according to any one of the preceding claims wherein the preservation system comprises allyl isothiocyanate, sorbate salts or mixtures thereof.

16. The process according to any one of the preceding claims, wherein the oil-in-water emulsion has a pH at 20°C in the range of from 4.4 to 4.8 and an edible acid content in the aqueous phase of from 0.3 to 0.75% by weight.

17. The edible oil-in-water emulsion obtainable by the process according to any one of the preceding claims.

18. The edible emulsion according to claim 17 which is a mayonnaise, dressing or side sauce.

19. The edible emulsion according to claim 18 which is a mayonnaise or dressing comprising less than 55% by weight of oil.

20. The edible emulsion according to any one of claims 17 to 19, wherein the presence of live micro-organisms can be detected after storage for at least 3 weeks at a maximum temperature of 8°C.

## Patentansprüche

1. Verfahren zur Herstellung einer essbaren Öl-in-Wasser Emulsion, umfassend lebende Mikroorganismen, wobei das Verfahren den Schritt des Emulgierens eines essbaren Gemisches, umfassend Öl, Wasser, lebende Mikroorganismen, Emulgator und ein Konservierungssystem umfasst, und das Verfahren bei einer Temperatur von 35°C oder weniger durchgeführt wird und wobei die Öl-in-Wasser Emulsion nach Herstellung bei einer Temperatur von 8°C oder weniger gelagert wird.

2. Verfahren zur Herstellung einer essbaren Öl-in-Wasser Emulsion, umfassend lebende Mikroorganismen, wobei das Verfahren den Schritt des Emulgierens eines essbaren Gemisches, umfassend Öl, Wasser, lebende Mikroorganismen, Emulgator und ein Konservierungssystem umfasst, und das Verfahren ohne einen Wärmebehandlungsschritt durchgeführt wird und wobei die Öl-in-Wasser Emulsion nach Herstellung bei einer Temperatur von 8°C oder weniger gelagert wird.

3. Verfahren gemäß einem der Ansprüche 1 oder 2, wobei das Verfahren bei einer Temperatur von 25°C oder weniger durchgeführt wird.

4. Verfahren gemäß einem der vorhergehenden Ansprüche, wobei das Öl, Wasser, lebende Mikroorganismen, Emulgator und Konservierungssystem zusammen emulgiert werden, um ein erstes emulgiertes Gemisch a) zu bilden, welches erste emulgierte Gemisch mindestens einem weiteren Verfahrensschritt unterworfen wird, um die essbare Öl-in-Wasser Emulsion zu bilden.

5. Verfahren gemäß einem der vorhergehenden Ansprüche, wobei das Verfahren einen Schritt der pH-Reduktion unter Verwendung einer essbaren Säure umfasst.

6. Verfahren gemäß einem der vorhergehenden Ansprüche, wobei sich der pH bei 20°C der Öl-in-Wasser Emulsion im Bereich von 4,0 bis 5,0 befindet.

7. Verfahren gemäß Anspruch 6, wobei sich der pH im Bereich von 4,4 bis 4,8 befindet.

8. Verfahren gemäß einem der vorhergehenden Ansprüche, wobei die Öl-in-Wasser Emulsion eine Menge von 0,1 bis 1,3 Gew.-% an essbarem Säuregehalt in der wässerigen Phase der Emulsion umfasst.

9. Verfahren gemäß einem der vorhergehenden Ansprüche, wobei die lebenden Mikroorganismen durch den Einschluss eines essbare lebende Mikroorganismen enthaltenden Produkts in die Öl-in-Wasser Emulsion eingeschlossen werden.

10. Verfahren gemäß Anspruch 9, wobei das essbare lebende Mikroorganismen enthaltende Produkt Joghurt ist.

11. Verfahren gemäß einem der Ansprüche 9 oder 10, wobei die Öl-in-Wasser Emulsion eine Menge von 5 bis 50 Gew.-% des lebende Mikroorganismen enthaltenden Produkts umfasst.

12. Verfahren gemäß einem der vorhergehenden Ansprüche, wobei die lebenden Mikroorganismen ausgewählt werden aus Bakterien, basierend auf Milchfermenten, Milchhefen, Milchbakterien und Gemischen daraus.

13. Verfahren gemäß Anspruch 12, wobei die Milchbakterien aus den folgenden Stämmen ausgewählt werden: Lactobacillus bulgaricus, Lactobacillus casei, Lactobacillus acidophilus, Lactococcus lactis, Streptococcus thermophilus, Bifidobacterium bifidum, Bifidobacterium lingum und Gemischen daraus.

14. Verfahren gemäß einem der vorhergehenden Ansprüche, wobei die Öl-in-Wasser Emulsion eine Menge von 30-75 Gew.-% Öl umfasst.

15. Verfahren gemäß einem der vorhergehenden Ansprüche, wobei das Konservierungssystem Allylisothiocyanat, Sorbatsalze oder Gemische daraus umfasst.

16. Verfahren gemäß einem der vorhergehenden Ansprüche, wobei die Öl-in-Wasser Emulsion einen pH bei 20°C im Bereich von 4,4 bis 4,8 und einen Gehalt an essbarer Säure in der wässerigen Phase von 0,3 bis 0,75 Gew.-% hat.

17. Essbare Öl-in-Wasser Emulsion, welche durch das Verfahren gemäß einem der vorhergehenden Ansprüche erhältlich ist.

18. Essbare Emulsion gemäß Anspruch 17, welche eine Mayonnaise, Dressing oder Beilagen-Sauce ist.

19. Essbare Emulsion gemäß Anspruch 18, welche eine Mayonnaise oder Dressing ist, umfassend weniger als 55 Gew.-% Öl.

20. Essbare Emulsion gemäß einem der Ansprüche 17 bis 19, wobei die Gegenwart von lebenden Mikroorganismen nach Lagerung für mindestens 3 Wochen bei einer maximalen Temperatur von 8°C nachgewiesen werden kann.

## Revendications

1. Procédé de préparation d'une émulsion huile dans l'eau comestible comprenant des microorganismes vivants, ledit procédé comprenant l'étape consistant à émulsionner un mélange comestible comprenant de l'huile, de l'eau, des microorganismes vivants, un émulsifiant et un système de conservation, et ledit procédé étant mené à bien à une température de 35°C ou moins, et dans lequel l'émulsion huile dans l'eau est stockée à une température de 8°C ou inférieure après la préparation.

2. Procédé de préparation d'une émulsion huile dans l'eau comestible comprenant des microorganismes vivants, ledit procédé comprenant l'étape consistant à émulsionner un mélange comestible comprenant de l'huile, de l'eau, des microorganismes vivants, un émulsifiant et un système de conservation, et ledit procédé étant mené à bien sans étape de traitement thermique, et dans lequel l'émulsion huile dans l'eau est stockée à une température de 8°C ou inférieure après la préparation.

3. Procédé selon l'une ou l'autre des revendications 1 ou 2, dans lequel le procédé est mené à bien à une température de 25°C ou inférieure.

4. Procédé selon l'une quelconque des revendications précédentes, dans lequel l'huile, l'eau, les microorganismes vivants, l'émulsifiant et le système de conservation sont émulsionnés ensemble pour former un premier mélange émulsionné a), ledit premier mélange émulsionné étant soumis à au moins une autre étape de fabrication pour former l'émulsion huile dans l'eau comestible.

5. Procédé selon l'une quelconque des revendications précédentes, dans lequel le procédé comprend une étape de réduction du pH utilisant un acide comestible.

6. Procédé selon l'une quelconque des revendications précédentes, dans lequel le pH à 20°C de l'émulsion huile dans l'eau se situe dans la plage allant de 4,0 à 5,0.

7. Procédé selon la revendication 6, dans lequel le pH se situe dans la plage allant de 4,4 à 4,8.

8. Procédé selon l'une quelconque des revendications précédentes, dans lequel l'émulsion huile dans l'eau comprend une quantité allant de 0,1 à 1,3 % en poids d'un acide comestible dans la phase aqueuse de l'émulsion.

9. Procédé selon l'une quelconque des revendications précédentes, dans lequel les microorganismes vivants sont inclus dans l'émulsion huile dans l'eau par l'inclusion d'un produit contenant un microorganisme vivant comestible.

10. Procédé selon la revendication 9, dans lequel le produit contenant un microorganisme comestible vivant est du yoghourt.

11. Procédé selon l'une ou l'autre des revendications 9 ou 10, dans lequel l'émulsion huile dans l'eau comprend une quantité allant de 5 à 50 % en poids du produit contenant les microorganismes vivants.

12. Procédé selon l'une quelconque des revendications précédentes, dans lequel les microtirganismes vivants sont sélectionnés parmi les ferments lactiques à base de bactéries, les levures lactiques, les bactéries lactiques et les mélanges de ceux-ci.

13. Procédé selon la revendication 12, dans lequel les bactéries lactiques sont sélectionnées parmi les souches suivantes : Lactobacillus Bulgaris, Lactobacillus Casei, Lactobacillus Acidophilus, Lactococcus Lactis, Streptococcus Thermophilus, Bifidobacterium Bifidum, Bifidobacterium Lingum et mélanges de ceux-ci.

14. Procédé selon l'une quelconque des revendications précédentes, dans lequel l'émulsion huile dans l'eau comprend une quantité allant de 30 à 75 % en poids d'huile.

15. Procédé selon l'une quelconque des revendications précédentes, dans lequel le système de conservation comprend de l'allyl isothianate, des sels de sorbate ou des mélanges de ceux-ci.

16. Procédé selon l'une quelconque des revendications précédentes, dans lequel l'émulsion huile dans l'eau a un pH à 20°C se situant dans la plage allant de 4,4 à 4,8, et une teneur en acide comestible dans la phase aqueuse allant de 0,3 à 0,75 % en poids.

17. Emulsion-huile dans l'eau pouvant être obtenue par le procédé selon l'une quelconque des revendications précédentes.

18. Emulsion comestible selon la revendication 17, qui est une mayonnaise, une sauce salade ou une sauce d'accompagnement.

19. Emulsion comestible selon la revendication 18, qui est une mayonnaise ou une sauce pour salade comprenant moins de 55 % en poids d'huile.

20. Emulsion comestible selon l'une quelconque des revendications 17 à 19, dans laquelle la présence de microorganismes vivants peut être détectée après un stockage d'au moins 3 semaines à une température maximum de 8°C.
